# EUROPÄISCHE PATENTSCHRIFT

(11) **EP 1 841 976 B1**
(45) Veröffentlichungstag und Bekanntmachung des Hinweises auf die Patenterteilung: **25.07.2012**
(21) Anmeldenummer: 05811226.9
(22) Anmeldetag: 23.11.2005
(51) Int. Cl.: F16D 3/38

(54) **DICHTRING FÜR EINE GELENKKREUZBÜCHSE**
SEALING RING FOR A UNIVERSAL JOINT BUSH
BAGUE D'ETANCHEITE DESTINEE A UNE DOUILLE DE CROISILLON

(30) Priorität: 26.01.2005 DE 102005003609
(43) Veröffentlichungstag der Anmeldung: 10.10.2007
(73) Patentinhaber: Schaeffler Technologies AG & Co. KG, 91074 Herzogenaurach (DE)
(72) Erfinder: JAUERNIG, Frank, 91086 Aurachtal (DE); LEHMEIER, Manfred, 90475 Nürnberg (DE); JAUERNIG, Dieter, 91074 Herzogenaurach (DE); KRUPPA, Martin, 91074 Herzogenaurach (DE)
(86) Internationale Anmeldenummer: PCT/EP2005/012514
(87) Internationale Veröffentlichungsnummer: WO 2006/079381

(56) Entgegenhaltungen:
- WO-A-2005/017376
- DE-A1- 3 017 452
- DE-A1- 10 302 069
- GB-A- 2 072 764
- US-A- 4 154 490
- US-B1- 6 601 855

## Beschreibung

### Gebiet der Erfindung

Die vorliegende Erfindung betrifft eine Gelenkkreuzbüchse, die für ein Gelenk einer Gelenkwelle bestimmt ist, die zwei an ihren Enden Gabeln aufweisende Wellen umfasst, die über ein Gelenkkreuz verbunden sind. Die einzelnen Zapfen des Gelenkkreuzes sind in topfartig gestalteten Gelenkkreuzbüchsen über ein Wälzlager schwenkbar gelagert. Ein sich zwischen dem Zapfen des Gelenkkreuzes und der Gelenkkreuzbüchse einstellender Ringspalt ist dabei über einen Dichtring abgedichtet.

### Hintergrund der Erfindung

Kreuzgelenkwellen werden in verschiedenen technischen Bereichen eingesetzt, wie z. B. in Personenkraftwagen, Lastkraftwagen, Landmaschinen sowie Bau- und Erdbewegungsmaschinen, und dienen zur Übertragung von Drehmomenten bei einem bestimmten Beugungswinkel. In diesen Maschinen und Fahrzeugen sind die Gelenkkreuzbüchsen der Gelenkkreuze äußeren Einflüssen wie beispielsweise, Staub, Wasser, Sand, Schlamm ausgesetzt. Falls die als Präzisionslager ausgebildeten Gelenkkreuzbüchsen des Gelenkkreuzes nicht ausreichend abgedichtet sind, kann es zu einem vorzeitigen Ausfall des Lagers und somit der Kreuzgelenkwelle kommen. Zum Austausch der Gelenkkreuzbüchsen und / oder des Gelenkkreuzes ist ein relativ aufwendiger Montageaufwand erforderlich, verbunden mit einem nachteiligen Stillstand der Maschine

Eine Gelenkkreuzbüchs der zuvor beschriebenen Bauart ist beispielsweise aus der DE 41 28 179 A1 und insbesondere aus US-4154490, WO-2005/017376 und GB2072764 bekannt. Zur Abdichtung des Ringspaltes zwischen dem Zapfen des Gelenkkreuzes und der Gelenkkreuzbüchse zeigt die bekannte Lösung eine zwei Dichtringe umfassende Dichtungsanordnung. Ein erstes als Radialwellendichtring ausgebildetes Dichtelement ist dabei am offenen Ende in die Gelenkkreuzbüchse eingepresst. Weiterhin umfasst die Dichtungsanordnung einen drehfest auf dem Zapfen des Gelenkkreuzes fixierten Dichtring, der die Stirnseite der Gelenkkreuzbüchse abdeckt und gleichzeitig mit einem Bord in einen gestuften, stirnseitigen Bereich der Gelenkkreuzbüchse eingreift und mittels einer Dichtlippe in eine Ringnut eingreift. Diese bekannte Dichtungsanordnung, deren Dichtringe übereinstimmend Armierungen aufweisen verursachen hohe Herstellkosten und erfordern einen großen Montageaufwand sowie zumindest in axialer Richtung einen erhöhten axialen Bauraum.

### Zusammenfassung der Erfindung

Der vorliegenden Erfindung liegt die Aufgabe zugrunde, eine kostengünstig herstellbare, einfach montierbare und wirksame Abdichtung für eine Gelenkkreuzbüchse zu realisieren, zur Erzielung einer hohen Lebensdauer.

Diese Problemstellung wird erfindungsgemäß durch die Ansprüche 1 und 14 gelöst.

Gemäß Anspruch 1 ist zur Abdichtung des Ringspaltes der erfindungsgemäßen Gelenkkreuzbüchse ein einteiliger Dichtring vorgesehen. In der Vormontage ist der Dichtring der Gelenkkreuzbüchse so zugeordnet, dass dieser während der Montage sich selbsttätig auf den Zapfen des Gelenkkreuzes verschiebt, bis zum Erreichen einer Endposition. In der Einbaulage ist damit der Dichtring auf einer Mantelfläche des Zapfens von dem Gelenkkreuz fixiert.

Der erfindungsgemäße Aufbau des einteiligen Dichtrings umfasst mehrere einstückig miteinander verbundene, radial nach außen gerichtete Dichtlippen, von denen zumindest eine Dichtlippe der Gelenkkreuzbüchse zugeordnet ist. Dabei ist eine Dichtlippe formschlüssig mit der Gelenkkreuzbüchse verbunden. Dieser Dichtringaufbau ermöglicht in der Vormontage eine unverlierbare Zuordnung des Dichtrings an der Gelenkkreuzbüchse, wodurch die Montage der Gelenkkreuzbüchse vereinfacht werden kann.

Bei bisherigen Montagefolgen wurde der Dichtring auf den Zapfen des Gelenkkreuzes vormontiert, bevor die Gelenkkreuzbüchse auf dem Zapfen axial zugeführt wurde. Im Vergleich dazu wird durch die Erfindung, die den Dichtring während der Vormontage der Gelenkkreuzbüchse zuordnet, die Abdichtfunktion des Dichtrings verbessert. Die erfindungsgemäße Zuordnung des Dichtring, verbunden mit deren Gestaltung, verhindert wirksam eine fehlerhafte Einbaulage der Dichtlippen gegenüber der Gelenkkreuzbüchse. Durch den einteiligen Aufbau des erfindungsgemäßen Dichtrings, der sowohl die innere, d.h. die innerhalb der Gelenkkreuzbüchse platzierte Dichtung, als auch die Funktion der Vordichtung übernimmt, verringert sich der Bauteileumfang sowie der Montageaufwand. Außerdem stellt sich für den erfindungsgemäßen einteiligen Dichtring gegenüber der bekannten zweiteiligen Bauweise ein Kostenvorteil ein.

Weitere vorteilhafte Ausgestaltungen sind Gegenstand der abhängigen Ansprüche 2 bis 13.

Der erfindungsgemäße Dichtringaufbau schließt drei einstückig miteinander verbundene, übereinstimmend radial nach außen gerichtete Dichtlippen ein. Bevorzugt sind dabei zwei Dichtlippen der Gelenkkreuzbüchse und ein Dichtlippe dem Zapfen des Gelenkkreuzes zugeordnet.

Eine vorteilhafte Ausgestaltung der Erfindung sieht vor, die Gelenkkreuzbüchse spanlos durch ein Tiefziehverfahren herzustellen. Stirnseitig im Bereich der Öffnung ist die topfartig gestaltete Gelenkkreuzbüchse mit einem radial nach innen gerichteten, umlaufenden Bord versehen, an dem zwei Dichtlippen des Dichtrings unmittelbar oder mittelbar abgestützt sind. Durch die Abstützung der Dichtlippen an dem Bord der Gelenkkreuzbüchse ergibt sich in der Vormontage eine verliergesicherte Zuordnung des Dichtrings an der Gelenkkreuzbüchse. Damit ist gleichzeitig eine für die Funktion der Abdichtung wichtige Endlagenposition des Dichtrings auf der Mantelfläche des mit dem Gelenkkreuz verbundenen Zapfens erzielbar.

Bevorzugt ist der erfindungsgemäße Dichtring in der Einbaulage über eine Dichtlippe an einer Innenwandung der Gelenkkreuzbüchse abgestützt. Diese Dichtlippe bildet weiterhin partiell axial vorstehende Ansätze, die im Einbauzustand an dem stirnseitigen Bord der Gelenkkreuzbüchse innenseitig anliegen.

Die mittlere Dichtlippe des Dichtrings stützt sich außenseitig an dem Bord der Gelenkkreuzbüchse ab. Die dem Bord der Gelenkkreuzbüchse mittelbar oder unmittelbar zugeordneten Dichtlippen sowie durch deren maßliche Auslegung gewährleisten eine optimale Abstützkraft der Dichtlippe an der zugehörigen Kontaktfläche des Bordes. Damit stellt sich eine verbesserte Dichtfunktion ein, wodurch eine nachteilige Kontamination des Innenraums der Gelenkkreuzbüchse wirksam vermieden wird.

Übereinstimmend ist die innerhalb der Gelenkkreuzbüchse positionierte Dichtlippe sowie die außenseitig an dem Bord der Gelenkkreuzbüchse abgestützte Dichtlippe im Einbauzustand in Richtung des Bordes der Gelenkkreuzbüchse geneigt. Diese geneigte Einbaulage der Dichtlippen in Verbindung mit den partiell axial vorstehenden Ansätzen der inneren Dichtlippe ermöglicht bei der Montage eine Entlüftung des Innenraums der Gelenkkreuzbüchse. Bei einem Aufschieben der Baueinheit, Gelenkkreuzbüchse, Wälzkörper und Dichtring auf den Zapfen des Gelenkkreuzes wird die in der Gelenkkreuzbüchse eingeschlossene Luft nicht komprimiert. Sobald der Zapfen des Gelenkkreuzes bei der Montage den Dichtring passiert hat, kann die eingeschlossene Luft innerhalb der Gelenkkreuzbüchse bereits nach einem geringen Druckanstieg entweichen. Dazu bewirkt die Luft eine im Uhrzeigersinn gerichtete Ausweichbewegung der innenseitig an der Gelenkkreuzbüchse geneigt abgestützte Dichtlippe in den Zonen, die sich zwischen den partiell axial vorstehenden Ansätze einstellen. Die Luft aus dem Inneren der Gelenkkreuzbüchse passiert anschließend ein Spaltmaß, das radial von dem Dichtungsfuß und der Endkontur des stirnseitigen Bordes der Gelenkkreuzbüchse begrenzt ist, bevor die Luft anschließend die außenseitig geneigt an dem Bord abgestützte mittlere Dichtlippe des Dichtrings ebenfalls im Uhrzeigersinn verschwenkt. Damit stellt sich eine wirksame Entlüftung des Innenraums der Gelenkkreuzbüchse während der Montage ein.

Die dritte Lippe des erfindungsgemäßen Dichtrings ist im eingebauten Zustand an einem gestuften Abschnitt des Zapfens von dem Gelenkkreuz abgestützt. In der Einbaulage stellt sich zwischen der mittleren und der dem Zapfen zugeordneten Dichtlippe eine V-förmige Spreizung beider Dichtlippen ein bzw. eine V-förmige Ringnut.

Der erfindungsgemäße Dichtring bildet innerhalb der Gelenkkreuzbüchse weiterhin einen Axialanschlag für die Wälzkörper des Radiallagers. Dazu kann der Dichtringfuß bzw. der Dichtringboden entsprechend verlängert werden, zur Erzielung eines lokal begrenzten Axialanschlages für die Wälzkörper.

Bevorzugt ist die innere Dichtlippe des erfindungsgemäßen Dichtrings an einem wandstärkenreduzierten, d. h. eine radiale Stufe bildenden Abschnitt der Gelenkkreuzbüchse abgestützt. Diese Maßnahme erfordert einerseits eine bevorzugte verlängerte, die Elastizität verbessernde innere Dichtlippe des Dichtrings und andererseits ein vereinfachtes, spanloses Umformen der Wandung der Gelenkkreuzbüchse, zur Bildung eines radial nach innen gerichteten Bordes.

Ein weiterer Kostenvorteil ist erzielbar durch die Verwendung eines ausschließlich aus Kunststoff oder einem Dichtringwerkstoff hergestellten Dichtrings. Weiterhin schließt die Erfindung ein, den Dichtring zumindest bereichsweise mit einer Armierung zu versehen. Bevorzugt bietet sich dazu an, stirnseitig in den Dichtring eine scheibenartige Armierung einzubringen, die gleichzeitig einen Axialanschlag für die Wälzkörper der Radiallagerung bildet.

Der zuvor beschriebene erfindungsgemäße Dichtring ermöglicht in vorteilhafterweise das nachfolgend beschriebene Montageverfahren für ein Gelenk einer Kreuzgelenkwelle, gemäß Anspruch 14.

Das für dieses Verfahren vorgesehene Gelenk weist folgenden Aufbau auf:
- zwei an ihren Enden Gabeln aufweisende Wellen sind mit zwei gegenüberliegend angeordneten Bohrungen zur Aufnahme je einer Gelenkkreuzbüchse versehen;
- in jeder topfartig gestalteten Gelenkkreuzbüchse ist ein Zapfen des Gelenkkreuzes eingesetzt, der über ein Radiallager mit zylindrisch gestalteten Wälzkörpern schwenkbar ist;
- ein einstückig gestalteter Dichtring mit drei radial nach außen gerichteten Dichtlippen ist zur Abdichtung eines Ringspaltes vorgesehen, der sich zwischen dem Zapfen des Gelenkkreuzes und der Gelenkkreuzbüchse einstellt;
- eine an einer Innenwandung der Gelenkkreuzbüchse abgestützte Dichtlippe des Dichtrings bildet axial vorstehende Ansätze, die an einem radial nach innen gerichteten Bord der Gelenkkreuzbüchse abgestützt sind und die eine Entlüftung des Innenraums der Gelenkkreuzbüchse sicherstellen.

Das erfindungsgemäße Verfahren zur Montage des Gelenks einer Kreuzgelenkwelle erfolgt in folgenden Schritten:
- Einbringen des Gelenkkreuzes in die Bohrungen der Gabel jeder Welle;
- Einsetzen des Dichtrings stirnseitig in den Öffnungsbereich der Gelenkkreuzbüchse;
- Einpressen einer Gelenkkreuzbüchse in jede Bohrung der Gabel, synchron dazu:
   ■ schiebt sich jede Gelenkkreuzbüchse axial auf einen Zapfen des Gelenkkreuzes;
   ■ wird der Dichtring bis zum Erreichen einer Endlage auf einer Mantelfläche des Zapfens des Gelenkkreuzes verschoben;
   ■ entweicht die im Innenraum der Gelenkkreuzbüchse eingeschlossene Luft über die Entlüftung der inneren Dichtlippe.

### Kurze Beschreibung der Zeichnungen

Bevorzugte Ausführungsbeispiele gemäß der Erfindung sind in den Zeichnungen schematisch dargestellt und anhand der selben näher erläutert.

Es zeigt:
- Figur 1: in einem Halbschnitt auszugsweise ein Gelenkkreuz in Verbindung mit einer Gelenkkreuzbüchse sowie deren erfindungsgemäßen Dichtring;
- Figur 2: eine vormontierbare Baueinheit, bestehend aus der Gelenkkreuzbüchse, dem Radiallager sowie dem Dichtring;
- Figur 3: in einer Perspektive als Einzelteil den erfindungsgemäßen Dichtring.

### Detaillierte Beschreibung der Zeichnungen

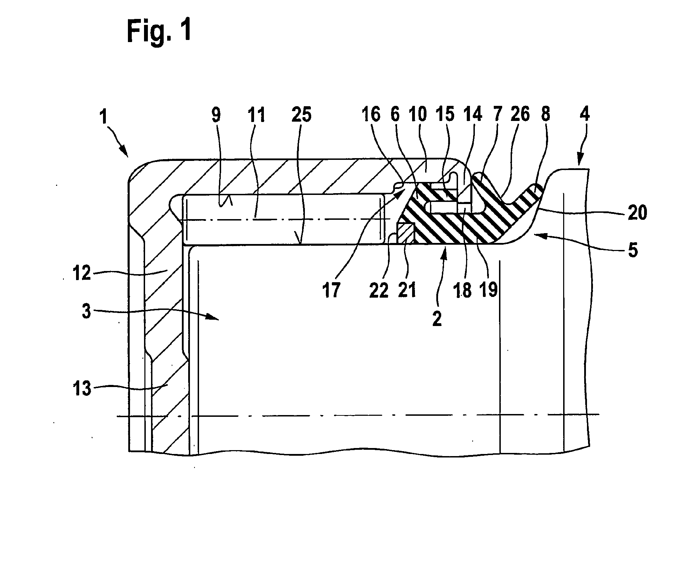

Wie der Figur 1 zu entnehmen, ist die Gelenkkreuzbüchse 1 über einen Dichtring 2 gegenüber einem Zapfen 3 des Gelenkkreuzes 4 abgedichtet. Der Dichtring 2 hat die Aufgabe, einen sich zwischen der Gelenkkreuzbüchse 1 und dem Zapfen 3 bildenden Ringspalt 5 wirksam abzudichten. Der einstückig gestaltete Dichtring 2 ist mit drei weitestgehend radial nach außen gerichteten Dichtlippen 6, 7, 8 versehen, von denen die Dichtlippen 6, 7 der Gelenkkreuzbüchse 1 und die Dichtlippe 8 dem Zapfen 3 zugeordnet sind. Der einstückig gestaltete, aus einem Kunststoff oder aus einem Dichtwerkstoff hergestellte Dichtring 2 erfüllt dabei gleichzeitig die Funktion einer inneren Dichtung sowie einer Vordichtung, d. h. der Dichtring 2 übernimmt die Funktion von bisher zwei getrennten Dichtungen, mit denen Gelenkkreuzbüchsen abgedichtet wurden.

Die bevorzugt spanlos durch ein Tiefziehverfahren hergestellte Gelenkkreuzbüchse 1 dient zur Aufnahme von zylindrisch gestalteten Wälzkörpern 11, die an einer Innenwandung 9 der Gelenkkreuzbüchse 1 sowie einer Mantelfläche 25 des Zapfens 3 geführt sind. Die wälzkörper bilden ein Radiallager, über das der Zapfen 3 des Gelenkkreuzes 4 schwenkbar gegenüber der drehstarr in einer Bohrung einer in Figur 1 nicht abgebildeten Gabel der Gelenkwelle schwenkbar ist. Ein Boden 12 der Gelenkkreuzbüchse 1 weist stirnseitig einen in Richtung des Zapfens 3 zeigenden Ansatz 13 auf, der einen Endanschlag bzw. ein Axiallager für den Zapfen 3 bildet. An dem vom Boden 12 abgewandten Ende weist die Gelenkkreuzbüchse 1 einen radial nach innen gerichteten, umlaufenden Bord 14 auf. Der Bord 14 schließt sich dabei an einen wandstärkenreduzierten Abschnitt 10 der Außenwandung der Gelenkkreuzbüchse 1 an, der eine radiale Stufe 16 bildet.

Die Dichtlippe 6, die auch als innere Dichtung bezeichnet werden kann, stützt sich kraftschlüssig an dem wandstärkenreduzierten Abschnitt 10 der Innenwandung 9 ab. Die Dichtlippe 6 weist dabei partiell umfangsverteilt angeordnete axial vorstehende Ansätze 15 auf, über die sich die Dichtlippe 6 punktuell axial an dem Bord 14 abstützt. Die mittlere Dichtlippe 7 ist außenseitig, der Stirnseite des Bordes 14 zugeordnet. Im Betriebszustand sind die Dichtlippen 6, 7 jeweils in Richtung des Bordes 14 geneigt, die gemeinsam mit den axial vorstehenden Ansätzen 15 der Dichtlippe 6 eine Entlüftung 17 bilden, wodurch bei der Montage des Zapfens 3 in die Gelenkkreuzbüchse 1 eine in der Gelenkkreuzbüchse 1 eingeschlossene Luft entweichen kann.

Der erfindungsgemäße Aufbau des Dichtrings 2 ermöglicht eine Montagefolge, wonach die vormontierte Baueinheit, bestehend aus der Gelenkkreuzbüchse 1, den Wälzkörpern 11 sowie dem Dichtring 2 gemeinsam axial auf den Zapfen 3 des Gelenkkreuzes 4 aufgeschoben wird. Sobald bei der Montage der Zapfen 3 die Einbaulage des Dichtrings 2 passiert hat, wird die innerhalb der Gelenkkreuzbüchse 1 eingeschlossene Luft verdichtet, die vorteilhaft nahezu widerstandsfrei über eine Entlüftung 17 entweichen kann. Sobald der Luftdruck der eingeschlossenen Luft innerhalb der Gelenkkreuzbüchse 1 einen Wert überschreitet, der eine Abstützkraft der Dichtlippe 6 übertrifft, weicht diese in den Zonen 24 zwischen den Ansätzen 15 durch ein Verschwenken im Uhrzeigersinn aus. Die eingeschlossene Luft gelangt anschließend über ein radial von dem Bord 14 und einem Dichtungsfuß 19 begrenztes Spaltmaß 18 in eine Kontaktzone zwischen der Dichtlippe 7 und dem Bord 14. Durch eine entsprechende Auslegung des Dichtrings 2 unterscheidet sich die Abstützkraft der Dichtlippe 7 nicht von der der Dichtlippe 6, so dass auch die Dichtlippe 7 abhebt und ein Entweichen der eingeschlossenen Luft ermöglicht.

Die weitere Dichtlippe 8 des Dichtrings 2 stützt sich an einem gestuften Abschnitt 20 des Zapfens 3 ab. Durch die jeweils entgegengesetzte Spreizung der Dichtlippen 6, 7 bildet sich eine V-förmig gestaltete umlaufende Ringnut 26. Alternativ zu einem ausschließlich aus Kunststoff oder einem Dichtringwerkstoff hergestellten Dichtring 2, kann der Dichtring 2 Armierungen einschließen. Gemäß Figur 1 ist der Dichtring 2 mit einer scheibenartig gestalteten Armierung 21 versehen, zur Bildung eines verschleißfesten Axialanschlages 22 für die Wälzkörper 11.

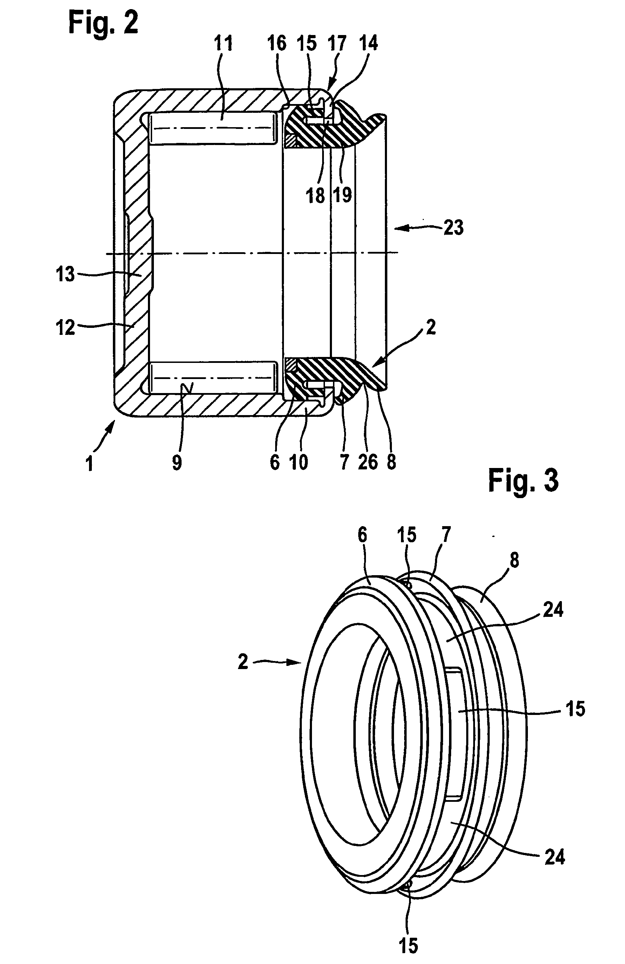

Die Figur 2 zeigt die vormontierbare Baueinheit 23, bestehend aus der Gelenkkreuzbüchse 1, den Wälzkörpern 11 sowie dem Dichtring 2. Durch die Gestaltung des Dichtrings 2, bei dem die Dichtlippe 6 den Bord 14 der Gelenkkreuzbüchse formschlüssig hintergreift, stellt sich eine verliergesicherte Anordnung des Dichtrings 2 an der Gelenkkreuzbüchse 1 ein. Damit eignet sich die Baueinheit 23 für eine automatisierte Montage mit dem Gelenkkreuz 4.

Die Figur 3 ist der Dichtring 2 als Einzelteil in einer Perspektive abgebildet. Diese Darstellung verdeutlicht insbesondere die Ausbildung der axial vorstehenden Ansätze 15 der Dichtlippe 6, die im Einbauzustand an dem Bord 14 der Gelenkkreuzbüchse 1 abgestützt sind. Die Gestaltung der Dichtlippen 6, 7 in Verbindung mit dem axialen Ansatz 15 bilden eine Entlüftung 17. Die Dichtlippe 6 kann dazu zwischen den axialen Ansätzen 15, im Bereich der Zonen 24 jeweils von der Innenwandung 9 der Gelenkkreuzbüchse 1 abheben, damit die in der Gelenkkreuzbüchse 1 während der Montage eingeschlossene Luft ungehindert entweichen kann.

### Bezugszahlen

- 1: Gelenkkreuzbüchse
- 2: Dichtring
- 3: Zapfen
- 4: Gelenkkreuz
- 5: Ringspalt
- 6: Dichtlippe
- 7: Dichtlippe
- 8: Dichtlippe
- 9: Innenwandung
- 10: Abschnitt (wandstärkenreduziert)
- 11: Wälzkörper
- 12: Boden
- 13: Ansatz
- 14: Bord
- 15: Ansatz
- 16: Stufe (radial)
- 17: Entlüftung
- 18: Spaltmaß
- 19: Dichtungsfuß
- 20: Abschnitt
- 21: Armierung
- 22: Axialanschlag
- 23: Baueinheit
- 24: Zone
- 25: Mantelfläche
- 26: Ringnut

## Patentansprüche

1. Gelenkkreuzbüchse, bestimmt für ein Gelenkkreuz (4) einer Kreuzgelenkwelle, das zwei an ihren Enden Gabeln aufweisende Wellen umfasst, die über das Gelenkkreuz (4) verbunden sind, wobei ein einzelner Zapfen (3) des Gelenkkreuzes (4) über die topfartig gestaltete, zylindrische Wälzkörper (11) einschließende und in einer Bohrung der Gabel eingesetzte Gelenkkreuzbüchse (1) schwenkbar ist, *wobei die Gelenkreuzbüchse (1) im Bereich einer Öffnung einen radial nach innen gerichteten umlaufenden Bord (14) aufweist,* ein sich zwischen dem Zapfen (3) des Gelenkkreuzes (4) und der Gelenkkreuzbüchse (1) einstellender Ringspalt (5) *mittels eines Dichtrings (2) abgedichtet ist, wobei der* Dichtring (2) in einer Vormontage einer aus der Gelenkkreuzbüchse (1), den Wälzkörpern (11) sowie dem Dichtring (2) bestehenden Baueinheit (23) zugeordnet ist, die in einer Einbaulage auf einer Mantelfläche (25) des Zapfens fixiert ist, wobei der Dichtring (2) einstückig miteinander verbundene, radial nach außen gerichtete Dichtlippen (6, 7, 8) aufweist, von denen zumindest eine Dichtlippe (6) formschlüssig mit der Gelenkkreuzbüchse (1) verbunden ist, und zumindest eine Dichtlippe (8) dem Zapfen (3) des Gelenkkreuzes (4) zugeordnet *ist wobei die Dichtlippe (6) in Richtung des Bordes (14) geneigt ist **dadurch gekennzeichnet, dass** der Dichtring* (2) *in der Einbaulage über eine Dichtlippe (6) an einer Innenwandung* (9) *der Gelenkkreuzbüchse (1) abgestützt ist und partiell mit axialen vorstehenden Ansätzen (15) versehen.*

2. Gelenkkreuzbüchse nach Anspruch 1, wobei der Dichtring (2) drei einstückig miteinander verbundene, radial nach außen gerichtete Dichtlippen (6, 7, 8) einschließt.

3. Gelenkkreuzbüchse nach Anspruch 1, deren Dichtring (2) eine dem Zapfen (3) des Gelenkkreuzes (4) zugeordnete Dichtlippe (8) umfasst.
- Wälzkörper (11) sowie den Dichtring (2) in die Gelenkkreuzbüchse (1) einbringen, zur Bildung der Baueinheit (23);
- in jede Bohrung der Gabel eine Baueinheit (23) einpressen, synchron dazu:
■ schiebt sich jede Gelenkkreuzbüchse (1) auf den Zapfen (3) des Gelenkkreuzes (4);
■ wird der Dichtring (2) bis zum Erreichen einer Endlage auf einer Mantelfläche (25) des Zapfens (3) verschoben;
■ entweicht die im Innenraum der Gelenkkreuzbüchse (1) eingeschlossene Luft über die Dichtlippe (6, 7), die ge- meinsam die Entlüftung (17) bilden.

4. Gelenkkreuzbüchse nach Anspruch 1, die spanlos, insbesondere durch ein Tiefziehverfahren hergestellt ist, wobei die Dichtlippen (6, 7) des Dichtrings (2) unmittelbar oder mittelbar *an dem Bord* abgestützt sind.

5. Gelenkkreuzbüchse nach Anspruch 1, in der partiell axial vorstehende Ansätze (15) der Dichtlippe (6) dem Bord (14) der Gelenkkreuzbüchse (1) zugeordnet sind.

6. Gelenkkreuzbüchse nach Anspruch 1, bei der die mittlere Dichtlippe (7) des Dichtrings (2) an dem Bord (14) der Gelenkkreuzbüchse (1) außenseitig abgestützt ist.

7. Gelenkkreuzbüchse nach Anspruch 5 und nach Anspruch 6, wobei die vorstehenden Ansätze (15) der Dichtlippe (6) in Verbindung mit der geneigt an der Stirnseite der Gelenkkreuzbüchse (1) abgestützten Dichtlippe (7) eine Entlüftung (17) eines Innenraums der Gelenkkreuzbüchse (1) zumindest bei der Montage sicherstellen.

8. Gelenkkreuzbüchse nach Anspruch 1, wobei die Dichtlippe (8) des Dichtrings (2) an einem radial gestuften Abschnitt (20) des Zapfens (3) von dem Gelenkkreuz (4) anliegt.

9. Gelenkkreuzbüchse nach Anspruch 1, bei der die Dichtlippen (7, 8), die dem Bord (14) der Gelenkkreuzbüchse (1) und dem Zapfen (3) des Gelenkkreuzes (4) zugeordnet sind, im Einbauzustand eine V-förmig gestaltete umlaufende Ringnut bilden.

10. Gelenkkreuzbüchse nach Anspruch 1, wobei eine Stirnseite des Dichtrings (2) einen Axialanschlag (22) für die Wälzkörper (11) bildet.

11. Gelenkkreuzbüchse nach Anspruch 1, bei der die innerhalb der Gelenkkreuzbüchse (1) positionierte Dichtlippe (6) an einem wandstärkenreduzierten, eine radiale Stufe (16) bildenden Abschnitt (10) der Gelenkkreuzbüchse (1) abgestützt ist.

12. Gelenkkreuzbüchse nach Anspruch 1, die einen ausschließlich aus Kunststoff oder einem Dichtringswerkstoff hergestellten Dichtring (2) umfasst.

13. Gelenkkreuzbüchse nach Anspruch 1, deren Dichtring (2) zumindest bereichsweise eine Armierung (21) einschließt.

14. Verfahren zur Montage eines für eine Kreuzgelenkwelle bestimmten Gelenkes (4) mit folgendem Aufbau:
- zwei an ihren Enden Gabeln aufweisende Wellen sind mit zwei gegenüberliegend angeordneten Bohrungen zur Aufnahme je einer Gelenkkreuzbüchse (1) versehen;
- in jeder topfartig gestalteten Gelenkkreuzbüchse (1) ist ein Zapfen (3) des Gelenkkreuzes (4) eingesetzt, der über zylindrisch gestalteten Wälzkörper (11) schwenkbar ist;
- ein drei radial nach außen gerichtete Dichtlippen (6, 7, 8) umfassender Dichtring (2) ist zur Abdichtung eines Ringspaltes (5) vorgesehen, der sich zwischen dem Zapfen (3) und der Gelenkkreuzbüchse (1) einstellt;
- eine an einer Innenwandung (9) der Gelenkkreuzbüchse (1) abgestützte Dichtlippe (6) ist partiell mit axialen vorstehenden Ansätzen (15) versehen, die an einem Bord (14) der Gelenkkreuzbüchse (1) abgestützt sind und die eine Entlüftung (17) eines Innenraums der Gelenkkreuzbüchse (1) sicherstellen;
die Montage des Gelenkkreuzes (4) erfolgt in folgenden Schritten:
- Gelenkkreuz (4) in Bohrungen der Gabel einsetzen;

## Claims

1. Universal-joint bushing intended for a universal joint (4) belonging to a universal-joint shaft and comprising two shafts which have forks at their ends and are connected via the universal joint (4), wherein an individual journal (3) of the universal joint (4) can be pivoted via the cup-like universal-joint bushing (1), which incorporates cylindrical rolling bodies (11) and is inserted in a bore of the fork, wherein the universal-joint bushing (1), in the region of an opening, has a radially inwardly directed encircling rim (14), an annular gap (5) which is established between the journal (3) of the universal joint (4) and the universal-joint bushing (1) is sealed by means of a sealing ring (2), wherein the sealing ring (2) is assigned, in a preassembly step, to a structural unit (23) which comprises the universal-joint bushing (1), the rolling bodies (11) and the sealing ring (2) and, in an installed position, is fixed on a lateral surface (25) of the journal, wherein the sealing ring (2) has radially outwardly directed sealing lips (6, 7, 8) which are connected to one another in a single piece and of which at least one sealing lip (6) is connected in a form-fitting manner to the universal-joint bushing (1) and at least one sealing lip (8) is assigned to the journal (3) of the universal joint (4), wherein the sealing lip (6) is inclined in the direction of the rim (14), **characterized in that** the sealing ring (2), in the installed position, is supported, via a sealing lip (6), on an inner wall (9) of the universal-joint bushing (1) and is provided, in part, with axial projecting extensions (15).

2. Universal-joint bushing according to Claim 1, wherein the sealing ring (2) incorporates three radially outwardly directed sealing lips (6, 7, 8) connected to one another in a single piece.

3. Universal-joint bushing according to Claim 1, of which the sealing ring (2) comprises a sealing lip (8) assigned to the journal (3) of the universal joint (4).

4. Universal-joint bushing according to Claim 1, which is produced without any cutting being involved, in particular by a deep drawing or thermoforming process, wherein the sealing lips (6, 7) of the sealing ring (2) are supported directly or indirectly on the rim.

5. Universal-joint bushing according to Claim 1, in which partially axially projecting extensions (15) of the sealing lip (6) are assigned to the rim (14) of the universal-joint bushing (1).

6. Universal-joint bushing according to Claim 1, in the case of which the central sealing lip (7) of the sealing ring (2) is supported on the outside of the rim (14) of the universal-joint bushing (1).

7. Universal-joint bushing according to Claim 5 and according to Claim 6, wherein the projecting extensions (15) of the sealing lip (6), in conjunction with the sealing lip (7) supported in an inclined state on the end side of the universal-joint bushing (1), ensure venting (17) of an interior of the universal-joint bushing (1) at least during assembly.

8. Universal-joint bushing according to Claim 1, wherein the sealing lip (8) of the sealing ring (2) butts against a radially stepped portion (20) of the journal (3) of the universal joint (4).

9. Universal-joint bushing according to Claim 1, in the case of which the sealing lips (7, 8), which are assigned to the rim (14) of the universal-joint bushing (1) and the journal (3) of the universal joint (4), form, in the installed state, an encircling V-shaped annular groove.

10. Universal-joint bushing according to Claim 1, wherein an end side of the sealing ring (2) forms an axial stop (22) for the rolling bodies (11).

11. Universal-joint bushing according to Claim 1, in the case of which the sealing lip (6), which is positioned within the universal-joint bushing (1), is supported on a portion (10) of the universal-joint bushing (1), this portion being of reduced wall thickness and forming a radial step (16).

12. Universal-joint bushing according to Claim 1, comprising a sealing ring (2) produced exclusively from plastics material or a sealing-ring material.

13. Universal-joint bushing according to Claim 1, of which the sealing ring (2) incorporates a reinforcement (21) at least in certain regions.

14. Method of assembling a universal joint (4) which is intended for a universal-joint shaft and has the following construction:
- two shafts which have forks at their ends are provided with two oppositely located bores each for accommodating a universal-joint bushing (1);
- a journal (3) of the universal joint (4) is inserted into each cup-like universal-joint bushing (1), it being possible for this journal to be pivoted via cylindrical rolling bodies (11);
- a sealing ring (2) comprising radially outwardly directed sealing lips (6, 7, 8) is provided for sealing an annular gap (5) which is established between the journal (3) and the universal-joint bushing (1);
- a sealing lip (6), which is supported on an inner wall (9) of the universal-joint bushing (1), is provided, in part, with axial projecting extensions (15), which are supported on a rim (14) of the universal-joint bushing (1) and ensure venting (17) of an interior of the universal-joint bushing (1);
assembly of the universal joint (4) taking place by means of the following steps:
- universal joint (4) is inserted into bores of the fork;
- rolling bodies (11) and the sealing ring (2) are introduced into the universal-joint bushing (1), in order to form the structural unit (23);
- a structural unit (23) is forced into each bore of the fork and, at the same time:
• each universal-joint bushing (1) is pushed onto the journal (3) of the universal joint (4);
• the sealing ring (2) is displaced until it reaches an end position on a lateral surface (25) of the journal (3) ;
• the air enclosed in the interior of the universal-joint bushing (1) escapes via the sealing lips (6, 7), which together form the means of venting (17).

## Revendications

1. Douille de croisillon, prévue pour un croisillon (4) d'un arbre à croisillon, qui comprend deux arbres présentant des fourches à leurs extrémités, lesquels arbres sont reliés par le biais du croisillon (4), un tourillon individuel (3) du croisillon (4) pouvant pivoter par le biais de la douille de croisillon (1) configurée en forme de pot, incluant des corps de roulement cylindriques (11) et insérée dans un alésage de la fourche, la douille de croisillon (1) présentant, dans la région d'une ouverture, un bord périphérique orienté radialement vers l'intérieur (14), une fente annulaire (5) s'établissant entre le tourillon (3) du croisillon (4) et la douille de croisillon (1) étant étanchée au moyen d'une bague d'étanchéité (2), la bague d'étanchéité (2), au cours d'un prémontage, étant associée à une unité constructive (23) constituée de la douille de croisillon (1), des corps de roulement (11) ainsi que de la bague d'étanchéité (2), l'unité constructive (23) étant fixée dans une position d'installation sur une surface d'enveloppe (25) du tourillon, la bague d'étanchéité (2) présentant des lèvres d'étanchéité (6, 7, 8) connectées d'une seule pièce les unes aux autres, orientées radialement vers l'extérieur, dont au moins une lèvre d'étanchéité (6) est connectée par engagement positif à la douille de croisillon (1), et au moins une lèvre d'étanchéité (8) étant associée au tourillon (3) du croisillon (4), la lèvre d'étanchéité (6) étant inclinée dans la direction du bord (14), **caractérisée en ce que** la bague d'étanchéité (2), dans la position d'installation, est supportée par le biais d'une lèvre d'étanchéité (6) contre une paroi interne (9) de la douille de croisillon (1) et est pourvue en partie de projections (15) saillantes axiales.

2. Douille de croisillon selon la revendication 1, dans laquelle la bague d'étanchéité (2) comporte trois lèvres d'étanchéité (6, 7, 8) connectées d'une seule pièce les unes aux autres, orientées radialement vers l'extérieur.

3. Douille de croisillon selon la revendication 1, dont la bague d'étanchéité (2) comprend une lèvre d'étanchéité (8) associée au tourillon (3) du croisillon (4).

4. Douille de croisillon selon la revendication 1, laquelle est fabriquée sans enlèvement de copeaux, notamment par un procédé d'emboutissage profond, les lèvres d'étanchéité (6, 7) de la bague d'étanchéité (2) étant supportées directement ou indirectement contre le bord.

5. Douille de croisillon selon la revendication 1, dans laquelle des projections (15) saillant en partie axialement de la lèvre d'étanchéité (6) sont associées au bord (14) de la douille de croisillon (1).

6. Douille de croisillon selon la revendication 1, dans laquelle la lèvre d'étanchéité centrale (7) de la bague d'étanchéité (2) est supportée du côté extérieur contre le bord (14) de la douille de croisillon (1).

7. Douille de croisillon selon la revendication 5 et selon la revendication 6, dans laquelle les projections saillantes (15) de la lèvre d'étanchéité (6) en association avec la lèvre d'étanchéité (7) supportée de manière inclinée contre le côté frontal de la douille de croisillon (1) garantissent un désaérage (17) d'un espace interne de la douille de croisillon (1) au moins lors du montage.

8. Douille de croisillon selon la revendication 1, dans laquelle la lèvre d'étanchéité (8) de la bague d'étanchéité (2) s'applique contre une portion étagée radialement (20) du tourillon (3) du croisillon (4).

9. Douille de croisillon selon la revendication 1, dans laquelle les lèvres d'étanchéité (7, 8), qui sont associées au bord (14) de la douille de croisillon (1) et au tourillon (3) du croisillon (4), forment dans l'état d'installation une rainure périphérique annulaire configurée en forme de V.

10. Douille de croisillon selon la revendication 1, dans laquelle un côté frontal de la bague d'étanchéité (2) forme une butée axiale (22) pour les corps de roulement (11).

11. Douille de croisillon selon la revendication 1, dans laquelle la lèvre d'étanchéité (6) positionnée à l'intérieur de la douille de croisillon (1) est supportée contre une portion (10) de la douille de croisillon (1) formant un étage radial (16) et ayant une épaisseur de paroi réduite.

12. Douille de croisillon selon la revendication 1, qui comprend une bague d'étanchéité (2) fabriquée exclusivement en plastique ou en un matériau de bague d'étanchéité.

13. Douille de croisillon selon la revendication 1, dont la bague d'étanchéité (2) inclut au moins en partie un renforcement (21).

14. Procédé de montage d'un croisillon (4) prévu pour un arbre à croisillon, comprenant la structure suivante :
- deux arbres présentant des fourches à leurs extrémités sont pourvus de deux alésages disposés de manière opposée pour recevoir chacun une douille de croisillon (1) ;
- dans chaque douille de croisillon (1) configurée en forme de pot est inséré un tourillon (3) du croisillon (4), lequel peut pivoter par le biais dé corps de roulement (11) de configuration cylindrique ;
- une bague d'étanchéité (2) comprenant trois lèvres d'étanchéité (6, 7, 8) orientées radialement vers l'extérieur est prévue pour étancher une fente annulaire (5), qui s'établit entre le tourillon (3) et la douille de croisillon (1) ;
- une lèvre d'étanchéité (6) supportée sur une paroi interne (9) de la douille de croisillon (1) est pourvue en partie de projections saillantes axiales (15), qui sont supportées contre un bord (14) de la douille de croisillon (1), et qui garantissent un désaérage (17) d'un espace interne de la douille de croisillon (1) ;
- le montage du croisillon (4) a lieu suivant les étapes suivantes :
- insertion du croisillon (4) dans des alésages de la fourche,
- introduction des corps de roulement (11) ainsi que de la bague d'étanchéité (2) dans la douille de croisillon (1), pour former l'unité constructive (23) ;
- pressage d'une unité constructive (23) dans chaque alésage de la fourche, et de manière synchronisée :
- chaque douille de croisillon (1) s'enfile sur le tourillon (3) du croisillon (4) ;
- la bague d'étanchéité (2) est déplacée jusqu'à parvenir en position d'extrémité sur une surface d'enveloppe (25) du tourillon (3) ;
- l'air enfermé dans l'espace interne de la douille de croisillon (1) s'échappe par le biais des lèvres d'étanchéité (6, 7) qui forment ensemble le désaérage (17).
